# EUROPÄISCHE PATENTSCHRIFT

(11) **EP 2 592 704 B1**
(45) Veröffentlichungstag und Bekanntmachung des Hinweises auf die Patenterteilung: **14.06.2017**
(21) Anmeldenummer: 12191822.1
(22) Anmeldetag: 08.11.2012
(51) Int. Cl.: H01S 3/067, H01S 3/08, H01S 3/094, H01S 3/16

(54) **Laservorrichtung mit einem optisch aktiven Material aufweisenden Multimode-Lichtleiter**
Laser device with a multi-mode optical waveguide comprising an optically active material
Dispositif laser comprenant un guide d'onde optique multimodes présentant un matériau optique actif

(30) Priorität: 08.11.2011 DE 102011055130; 06.07.2012 DE 102012106063; 28.09.2012 EP 12186628
(43) Veröffentlichungstag der Anmeldung: 15.05.2013
(73) Patentinhaber: LISA LASER PRODUCTS OHG FUHRBERG & TEICHMANN, 37191 Katlenburg-Lindau (DE)
(72) Erfinder: Fuhrberg, Peter, 37077 Göttingen (DE)
(74) Vertreter: REHBERG HÜPPE + PARTNER

(56) Entgegenhaltungen:
- DE-B4- 19 861 429
- US-A- 5 422 897
- US-A1- 2006 263 024
- US-A1- 2007 165 982
- US-B1- 7 539 231

## Beschreibung

### TECHNISCHES GEBIET DER ERFINDUNG

Die Erfindung betrifft eine Laservorrichtung mit den Merkmalen des Oberbegriffs des unabhängigen Patentanspruchs 1. Unter einer Singlemode-Faser ist dabei eine solche Lichtleiterfaser zu verstehen, die in Bezug auf alle relevanten Wellenlängen des Emissionsspektrums des optisch aktiven Materials nur eine transversale Mode leitet. Demgegenüber ist hier unter einer Multimode-Faser eine solche Lichtleiterfaser zu verstehen, die in Bezug auf alle relevanten Wellenlängen des Emissionsspektrums des optisch aktiven Materials auch höhere Moden als die transversale Grundmode leitet.

### STAND DER TECHNIK

Bei einer aus der US 6,625,182 B1 bekannten Laservorrichtung ist ein Multimode-Festkörperlaserstab aus optisch aktivem Material, wie beispielsweise Nd:YAG, ausgebildet. Das optisch aktive Material ist in einen Resonator eingebettet. An einem Ende dieses Resonators ist eine Singlemode-Faser mit einem eingeschriebenen Faser-Bragg-Gitter als Spiegel vorgesehen. Das gegenüberliegenden Ende des Festkörperlaserstabs ist mit einem Spiegel beschichtet, durch den hindurch das optisch aktive Material gepumpt wird. Laserlicht aus dem Resonator wird durch das Faser-Bragg-Gitter in die sich hinter dem Bragg-Gitter fortsetzende Singlemode-Faser ausgekoppelt. Die Singlemode-Faser mit dem eingeschriebenen Faser-Bragg-Gitter sorgt in dem Resonator der bekannten Laservorrichtung für eine selektive Reflektion von Photonen der transversalen Grundmode mit einer bestimmten, durch das Faser-Bragg-Gitter vorgegebenen Laserwellenlänge zurück in das optisch aktive Medium. Das optisch aktive Material erfährt so ein verstärktes Feedback auf der transversalen Grundmode und bei der vorbestimmten Laserwellenlänge. Durch den Resonator wird dieser Effekt weiter verstärkt. Das Laserlicht nimmt dabei die Eigenschaften der selektiv reflektierten Photonen aber nur so weit an, wie der aktive Festkörperlaserstab die Verstärkung dieser Eigenschaften zulässt. Zudem muss der Resonator, um eine hohe Verstärkung der selektiv reflektierten Photonen zu erhalten, eine große Anzahl von Reflektionen vorsehen, da der Festkörperlaserstab relativ kurz ist. Das heißt, beide Spiegel des Resonators müssen signifikant reflektieren. Das zu einem bestimmten Teil über die Singlemode-Faser hinter dem Faser-Bragg-Gitter ausgekoppelte Laserlicht der bekannten Laservorrichtung soll zum Beispiel dazu verwendet werden, einen mit Erbium dotierten Faserverstärker optisch zu pumpen.

Eine Laservorrichtung mit den Merkmalen des Oberbegriffs des unabhängigen Patentanspruchs 1 ist aus der Figur 7 der DE 198 61 429 B4 und der zugehörigen Beschreibung bekannt. Dort ist eine Singlemode-Faser als Modenfilter in einem Laserresonator vorgesehen, der über die Singlemode-Faser und eine aktive Multimode-Faser hinweg ausgebildet ist. Zwischen der als Modenfilter dienenden Singlemode-Faser und der Multimode-Faser erfolgt eine adiabatische Anpassung. Der Spiegel des Laserresonators an dem Singlemode-Faser-Ende kann ein Bragg-Gitter in der Singlemode-Faser sein. Durch diesen Spiegel erfolgt das Auskoppeln eines Singlemode-Laserstrahls. Gepumpt wird das aktive Material der Multimode-Faser von deren gegenüberliegenden Ende aus.

Gemäß einem weiteren Ausführungsbeispiel der DE 198 61 429 B4 ermöglicht die Verwendung einer Multimode-Faser den Entwurf von Doppelmantelfasern mit geringen Absorptionsquerschnitten statt einer separaten Singlemode-Faser als Modenfilter. So kann eine Erbium-dotierte Doppelmantelverstärkerfaser aus Multimode-Fasern hergestellt werden. Erbium-dotierte Doppelmantelfasern sind typischerweise relativ ineffizient, da große Mantel/Kern-Verhältnisse eingesetzt werden müssen, um das Pumplicht breitflächiger Diodenlaser unter Beibehaltung eines Singlemode-Faserkerns zu absorbieren. Typischerweise führt eine solche Ausgestaltung zu einem Mantel mit einem Durchmesser von 100 µm und einem Kerndurchmesser von 10 µm. Die effektive Absorption eines solchen Aufbaus ist 100 mal kleiner als die Absorption in einer Erbium-dotierten Einzelmantelfaser. Somit sind in diesem Fall 100 mal längere Faserverstärkerlängen erforderlich. Durch Einsatz einer Erbium-dotierten Multimode-Faser kann die Kerngröße verringert werden.

Im Zusammenhang mit noch einem weiteren Ausführungsbeispiel gibt die DE 198 61 429 B4 für eine als Modenfilter dienende Erbium/Yttermuim-Singlemode-Faser einen Kerndurchmesser von 28 µm und für drei im Handel erhältliche Multimode-Fasern einen Kerndurchmesser von 50 µm an.

Aus der US 5,422,897 A ist eine Laservorrichtung bekannt, bei der eine Faser, die bei einer gewünschten Laserwellenlänge eine Singlemode-Faser ist und in die ein Faser-Bragg-Gitter als Resonatorspiegel eingeschrieben ist, an ein Ende einer eine Faser angespeißt ist, die bei der gewünschten Laserwellenlänge eine Multimode-Faser ist und an deren anderen Ende ein weiterer Resonatorspiegel angeordnet ist. Laserlicht wird aus dieser Laservorrichtung durch die Singlemode-Faser ausgekoppelt. Die Kerndurchmesser der beiden Fasern sind so gewählt, dass die Spotgröße bei der Grundmode der Multimode-Faser im Wesentlichen mit derjenigen der Singlemode-Faser übereinstimmt, so dass eine effiziente Kopplung der Grundmoden der Fasern an ihren gekoppelten Enden erreicht wird. Die schematischen Figuren der US 5,422,897 A zeigen gleich große Kerndurchmesser der Multimode-Faser und der Singlemode-Faser. Ein Zentrieren des die Fasern verbindenden Spleißes stellt eine effiziente Kopplung zwischen den gewünschten Moden bereit.

Aus der US 2007/0165982 A1 ist es bekannt, an das Austrittsende einer Singlemode-Faser einen relativ kurzen Abschnitt einer Index-angepassten Multimode-Faser anzuspleißen, um einen aus dem kleineren Kern der Singlemode-Faser austretenden Strahl mit geringerem Verlust auszukoppeln, da er zuvor in den weiteren Kern der Multimode-Faser expandieren kann. Das Spleißen der Fasern kann durch Fusionsspleißen erfolgen, bei dem die Fasern stumpf aneinander angeschmolzen werden.

Die US 2010/0322575 A1 offenbart Laservorrichtungen mit einem Multimode-Festkörperlaserstab und einer Singlemode-Faser in einer Laserkavität, d. h. einem Laserresonator. Zwischen der Singlemode-Faser und dem Multimode-Festkörperlaserstab erfolgt eine adiabatische Anpassung. Der Spiegel des Laserresonators an dem Singlemode-Faser-Ende ist ein Bragg-Gitter in der Singlemode-Faser. An dem gegenüberliegenden Ende des Multimode-Festkörperlaserstabs erfolgt das Einkoppeln von Pumplicht und das Auskoppeln eines Singlemode-Laserstrahls.

Für Faserlaser auf Basis einer Doppelkern-Faser mit aktivem Laserkern ist es bekannt, dass die in dem aktiven Laserkern räumlich verteilte Anregungsenergie durch höhere Moden effizienter abgebaut werden kann als nur durch eine transversale Grundmode. Die höheren Moden weisen einen größeren Überlapp mit dem Pumpvolumen auf, vor allem in den Seitenbereichen. Ein Faserlaser mit Multimode-Laserkern ist daher in Bezug auf die Umsetzung der Pumpenergie zu Laserlicht weitaus effizienter als ein Singlemode-Laserkern. Die Herstellung von Faser-Bragg-Gittern in Multimode-Kernen ist jedoch bekanntermaßen erheblich schwieriger als in Singlemode-Kernen, sodass es schwierig ist, einen Multimode-Resonator mit integrierten Spiegeln für eine bestimmte Laserwellenlänge aufzubauen. Um einen Faserlaser mit einer aktiven Multimode-Faser dennoch bei einer bestimmten Laserwellenlänge zu betreiben, ist es bekannt, eine Oszillator- / Verstärkeranordnung zu verwenden. Als Oszillator verwendet man z. B. einen Singlemode-Faserlaser, dessen Resonatorspiegel von zwei Faser-Bragg-Gittern gebildet werden. An dem teilweise transmittierenden Gitter tritt Laserlicht mit der durch den Singlemode-Faserlaser vorgegebenen Laserwellenlänge und in der transversalen Grundmode in die aktive Multimode-Faser über. Die aktive Multimode-Faser arbeitet dann nur noch als Verstärker, der mittels des Oszillators, welcher somit quasi als Seed-Lasers arbeitet, bei der Laserwellenlänge in der transversalen Grundmode angestoßen wird. Üblicher Weise wird zwischen dem Singlemode-Oszillator und dem Multimode-Verstärker eine spezielle Optik zur Anpassung der Modenverhältnisse eingefügt. Das Pumpen des optisch aktiven Materials im Laserkern der Multimode-Faser kann bekanntermaßen über jedes beliebige oder beide Enden der Multimodelaserfaser erfolgen.

### AUFGABE DER ERFINDUNG

Der Erfindung liegt die Aufgabe zugrunde, einen einfach aufgebauten schmalbandig emittierenden Faserlaser mit hohem Gesamtwirkungsgrad aufzuzeigen.

### LÖSUNG

Die Aufgabe der Erfindung wird durch eine Laservorrichtung mit den Merkmalen des unabhängigen Patentanspruchs 1 gelöst. Bevorzugte Ausführungsformen der erfindungsgemäßen Laservorrichtung sind in den abhängigen Patentansprüchen definiert.

### BESCHREIBUNG DER ERFINDUNG

Eine erfindungsgemäße Laservorrichtung weist eine Multimode-Faser mit optisch aktivem Material in ihrem Laserkern auf. An ein Ende der Multimode-Faser ist eine Singlemode-Faser optisch angekoppelt. In die Singlemode-Faser ist ein Faser-Bragg-Gitter als Spiegel für Photonen einer Laserwellenlänge eingeschriebenen. Eine Pumplichtquelle koppelt Pumplicht vom anderen Ende der Multimode-Faser in die Multimode-Faser ein. Ein Durchmesser des Laserkerns der Multimode-Faser ist mindestens 1,5-mal so groß wie ein Durchmesser eines Kerns der Singlemode-Faser, wobei der Kern der Singlemode-Faser stumpf an den Laserkern der Multimode-Faser angesetzt ist. Der Durchmesser des Laserkerns der Multimode-Faser ist so gewählt, dass beim Pumpen ihres optisch aktiven Materials mit dem Pumplicht ein Multimode-Laserstrahl aus einem Auskoppelfenster austritt. Das Auskoppelfenster ist an dem anderen Ende der Multimode-Faser angeordnet und verhindert für einen Laserresonator ausreichende Reflektionen von Photonen der mindestens einen bestimmten Laserwellenlänge zurück in die Multimode-Faser.

Bei der erfindungsgemäßen Laservorrichtung weist das verwendete Auskoppelfenster nur eine geringe Reflektion zurück in die Multimode-Faser auf. Dies ist gleichbedeutend damit, dass die erfindungsgemäße Laservorrichtung keinen an seinen beiden Enden durch Spiegel begrenzten Laserresonator aufweist.

Dass bei der erfindungsgemäßen Laservorrichtung insgesamt kein Laserresonator ausgebildet ist, bedeutet, dass die Photonen der mindestens einen bestimmten Laserwellenlänge, bevor sie durch das Auskoppelfenster austreten, im Mittel eine Strecke in der Multimode-Faser zurücklegen, die kürzer ist als die Länge der Laservorrichtung zwischen dem Faser-Bragg-Gitter und dem Auskoppelfenster. Von den Photonen der mindestens einen Laserwellenlänge die auf das Auskoppelfenster treffen, werden die meisten über das Auskoppelfenster aus der die Multimode-Faser ausgekoppelt. Auch an dem gegenüberliegenden Ende gelangt nur ein kleiner Anteil der Photonen aus dem Laserkern der Multimode-Faser in den Kern der Singlemode-Faser, von dem wiederum nur ein kleiner Anteil von dem Faser-Bragg-Gitter zurück in den Laserkern der Multimode-Faser reflektiert wird. Die meisten der Photonen verlassen also den Teil der Laservorrichtung zwischen dem Faser-Bragg-Gitter und dem Auskoppelfenster, sobald sie zum ersten Mal eines der Enden der Multimode-Faser oder das Faser-Bragg-Gitter erreichen. Da die meisten Photonen zudem nahe der Pumplichtquelle, d. h. nahe dem Auskoppelfenster, von dem dort am stärksten gepumpten aktiven Material im Laserkern der Multimode-Faser emittiert werden, legen die aus dem Auskoppelfenster austretenden Photonen im Mittel typischerweise sogar nur eine Strecke durch die Laservorrichtung zurück, die nicht einmal halb so lang ist wie die Multimode-Faser.

Die geringe Zahl von Reflektionen von Photonen zurück in die Multimode-Faser an dem der Singlemode-Faser gegenüberliegenden Ende dienen dazu, von diesem anderen Ende aus gezielt keinen Einfluss auf das erzeugte Laserlicht zu nehmen. Das heißt, es wird gezielt vermieden, dass Photonen jedweder Wellenlänge und jedweder Mode in die Multimode-Faser reflektiert und dort verstärkt werden, weil dies zumindest einen unnötigen Verbrauch von Pumpenergie zur Folge hätte.

Allerdings ist bei der Erfindung eine gewisse Reflektion an dem der Singlemode-Faser abgekehrten Ende der Multimode-Faser von beispielsweise etwa 5 % von Vorteil, weil auf diese Weise die durch das Pumplicht bewirkte Inversion an dem der Singlemode-Faser zugekehrten Ende der Multimode-Faser abgeräumt wird, die durch die aus der Singlemode-Faser in die Multimode-Faser übertretenden Photonen nicht abgeräumt wird. So wird verhindert, dass sich dort eine hohe Inversion aufbaut, die durch außerhalb der Laservorrichtung erfolgende Reflektionen des ausgekoppelten Laserstrahls zurück in die Multimode-Faser unkontrolliert abgebaut werden und dann zu Schäden an dem der Singlemode-Faser zugekehrten Ende der Multimode-Faser führen könnte. Die durch diese begrenzten Reflektion in die Multimode-Faser an deren der Singlemode-Faser zugekehrten Ende seitlich neben dem Kern der Singlemode-Faser auftretenden Photonen werden durch ein weiteres Auskoppelfenster ausgekoppelt und verworfen. Dieses weitere Auskoppelfenster ist im Idealfall vollständig durchlässig, d. h. es weist keine Reflektion von Photonen zurück in die Multimode-Faser auf. Der so nicht genutzte Teil der Pumpenergie bleibt jedoch klein, wenn man ihn mit der Verlustleistung anderer Laservorrichtungen vergleicht. Zudem gilt weiterhin, dass die aus der neuen Laservorrichtung ausgekoppelten Photonen im Mittel eine geringere Strecke in der Laservorrichtung zurückgelegt haben als deren Länge zwischen dem Bragg-Gitter und dem Auskoppelfenster und dass diese mittlere Strecke typischerweise sogar weniger als halb so lang ist wie die Multimode-Faser.

Die Singlemode-Faser mit dem eingeschriebenen Faser-Bragg-Gitter reflektiert nur wenige Photonen in den Multimode-Kern zurück. Hierbei handelt es sich ausschließlich um Photonen der gewünschten Laserwellenlänge und in der transversalen Grundmode. Derartige Photonen treten beim Pumpen des optisch aktiven Materials der Multimode-Faser als Teil des Spektrums der spontanen Emission von alleine auf. Dieser Anteil des Spektrums wird gegenüber anderen Wellenlängen und Moden durch die Singlemode-Faser mit dem eingeschriebenen Faser-Bragg-Gitter positiv selektiert und in die Multimode-Faser zurück geschickt. Dort erfahren die Photonen in einem einzigen Durchgang eine induzierte Verstärkung über die gesamte Länge der Multimode-Faser, bis sie aus dem Auskoppelfenster an dem anderen Ende der Multimode-Faser als verstärktes Laserlicht austreten.

Die erfindungsgemäße Laservorrichtung kommt nicht nur ohne einen Spiegel an dem anderen Ende der Multimode-Faser aus; sondern eine nicht auf einen definierten Rest unterdrückte Reflektion von Photonen zurück in die Multimode-Faser beeinträchtigt sogar die gewünschte Emission der erfindungsgemäßen Laservorrichtung bei der gewünschten Laserwellenlänge in der Grundmode. Aus diesem Grund ist es bevorzugt, wenn die Reflektion des Auskoppelfensters in die Multimode-Faser bei allen relevanten Wellenlängen des spontanen Emissionsspektrums des optisch aktiven Materials der Multimode-Faser maximal 20 %, vorzugsweise maximal 10 %, beträgt. Umgekehrt ist aus den oben geschilderten Gründen eine gewisse Reflektion von mindestens 0,5 %, vorzugsweise von mindestens 1 % anzustreben. Beides kann konkret dadurch erreicht werden, dass eine Austrittsfläche des Auskoppelfensters für die relevanten Wellenlängen teilentspiegelt wird, wenn das andere Ende der Multimode-Faser nicht von sich aus das gewünschte Maß an Reflektion aufweist.

Das Auskoppelfenster der erfindungsgemäßen Laservorrichtung muss nicht direkt an dem Ende der Multimode-Faser zum Beispiel durch eine entspiegelnde Beschichtung ausgebildet sein, sondern kann auch in Form eines zusätzlichen optischen Elements, das mit einem reflektionslosen Übergang mit der Multimode-Faser verbunden ist, verwirklicht werden. Dem Fachmann sind entsprechende Techniken bekannt, zu denen auch ein sogenanntes Anspleißen zählt.

Ebenso ist die Singlemode-Faser vorzugsweise mit einem reflektionslosen Übergang mit der Multimode-Faser verbunden. Dabei tritt erfindungsgemäß ein markanter Sprung beim Durchmesser der Kerne zwischen der Multimode-Faser und der Singlemode-Faser auf. D. h., bei der erfindungsgemäßen Laservorrichtung wird auf eine sogenannte adiabatische Anpassung zwischen den Durchmessern der beiden Kerne, beispielsweise durch ein zwischengeschaltetes Teleskop, verzichtet. So nimmt der Kern der Singlemode-Faser nur ein dem Querschnittsverhältnis der beiden Kerne entsprechenden Anteil des im Kern der Multimode-Faser zu der Singlemode-Faser laufenden Lichts auf. Typischerweise ist der Durchmesser des Laserkerns der Multimode-Faser mindestens 1,5 mal so groß wie der Durchmesser eines Kerns der Singlemode-Faser, was einerseits die beiden Typen von Fasern unterscheidet und andererseits bei der Multimode-Faser die Einkopplung großer Mengen von Pumpenergie in den Laserkern erleichtert. Bei der erfindungsgemäßen Laservorrichtung kann das Verhältnis der beiden Kerndurchmesser zueinander auch leicht bei 2, 3 oder höher liegen. Der Anteil des von der Singlemode-Faser in ihrem Kern aufgenommenen Lichts hängt aber nicht nur von dem Verhältnis der Kerndurchmesser ab, sondern er wird auch dadurch weiter reduziert, dass die Singlemode-Faser bei der relevanten Wellenlänge nur Licht in der transversalen Grundmode führt.

Die Multimode-Faser und/oder die Singlemode-Faser der erfindungsgemäßen Laservorrichtung können insbesondere Doppelkern-Fasern mit einem Brechungsindexunterschied zwischen ihrem inneren Kern, der hier auch nur als Kern bezeichnet wird, und ihrem äußeren Kern oder Mantel sein. Hierbei handelt es sich in der Regel um sogenannte Quarz-Quarz-Fasern. Grundsätzlich sind aber auch andere Multimode-Fasern und Singlemode-Fasern, beispielsweise mit strukturiertem Kern mit gasgefüllten Zwischenräumen verwendbar. Bei der Multimode-Faser bildet der innere Kern der Doppelkern-Faser mit dem optisch aktiven Material den Laserkern, während der äußere Kern oder Mantel das Pumplicht zum Pumpen des optisch aktiven Materials führt und deshalb auch als Pumpmantel bezeichnet wird.

Der Laserkern der Multimode-Faser kann insbesondere mit einem seltenen Erdion dotiert sein, wie zum Beispiel mit Ytterbium, Erbium, Thulium oder Holmium. Die Dotierung ist auf die gewünschte Laserwellenlänge und das zur Verfügung stehende Pumplicht abzustimmen.

Grundsätzlich kann auch der Kern der Singlemode-Faser dotiert sein. Gegebenenfalls bietet sich dieselbe Dotierung wie bei der Multimode-Faser an. Der Aufwand für ein Dotieren und Pumpen der Singlemode-Faser steht jedoch häufig nicht in günstiger Relation zu der damit zusätzlich erzielbaren Verbesserung der Lasereigenschaften.

Die Pumplichtquelle der erfindungsgemäßen Laservorrichtung koppelt das Pumplicht an dem Ende der Multimode-Faser mit dem Auskoppelfenster beispielsweise durch das Auskoppelfenster in die Multimode-Faser ein. Dies ist aufgrund des nur einmaligen Durchlaufs des Laserlichts durch die Multimode-Faser günstig, da hierdurch quasi im Gegenstrom zu dem immer stärker werdenden Laserlicht gepumpt wird. Je stärker das Laserlicht bereits ist, desto mehr Pumpenergie kann es durch seine weitere Verstärkung übernehmen. Es versteht sich, dass das Pumplicht in jedem Fall nicht nur über den Kern, sondern auch über den gesamten angrenzenden Mantel der jeweiligen Faser geführt wird.

Typischerweise umfasst eine Pumplichtquelle der erfindungsgemäßen Laservorrichtung mindestens eine Laserdiode. Die Länge der Multimode-Faser ist typischerweise auf die Absorptionslänge des Pumplichts in der Multimode-Faser abgestimmt, d. h. mindestens etwa genauso groß wie diese Absorptionslänge. Die Länge der Multimode-Faser kann aber auch nach den Kriterien einer geringen Reabsorption des bereits generierten Laserlichts ausgewählt werden. Daraus ergeben sich unter Umständen andere optimal geeignete Faserlängen.

Das optisch aktive Material der erfindungsgemäße Laservorrichtung wird vorzugsweise kontinuierlich gepumpt, und das Laserlicht tritt dann entsprechend kontinuierlich aus dem Auskoppelfenster aus.

Durch geeignete Wahl eines Durchmessers des Laserkerns bzw. der numerischen Apertur der Multimode-Faser der erfindungsgemäßen Laservorrichtung wird dafür Sorge getragen, dass beim Pumpen des optisch aktiven Materials im Laserkern der Multimode-Faser ein Multimode-Laserstrahl aus dem Auskoppelfenster austritt. Wenn beispielsweise ein größerer Durchmesser des Laserkerns mit einer höheren numerischen Apertur von bspw. größer als 0,1 gewählt wird, tritt ein Multimode-Laserstrahl mit mehreren transversalen Moden aus dem Auskoppelfenster aus. Dies ist insbesondere dann der Fall, wenn die Multimode-Faser nur geringe Verluste für die höheren Moden aufweist und entsprechend Modenkopplung und das Modenübersprechen stark auftreten. Das Besondere hierbei ist allerdings, dass die in einem einzigen Durchgang durch die Multimode-Faser induzierten und verstärkten höheren transversalen Moden dieselbe Wellenlänge wie die transversale Grundmode, d. h. die gewünschte Laserwellenlänge, aufweisen. Würden die höheren Moden von einem Faser-Bragg-Gitter, z. B. von einem Gitter in einer angefügten Multimode-Faser, reflektiert worden sein, würden sie einen signifikanten Frequenzabstand zu der Grundmode und untereinander aufweisen.

Zudem weist die erfindungsgemäße Laservorrichtung durch die Ausgabe eines Multimode-Laserstrahls einen besonders hohen Gesamtwirkungsgrad auf, weil durch die Beteiligung der höheren Moden das Volumen des Laserkerns der Multimode-Faser, in dem das optisch aktive Material gepumpt wird, besser als nur durch die transversale Grundmode ausgenutzt wird. So wird bei dem einmaligen Durchlauf durch die Multimode-Faser mittels der höheren Moden viel zusätzliche Pumpenergie in das Laserlicht aufgenommen.

Das Faser-Bragg-Gitter in der Singlemode-Faser der erfindungsgemäßen Laservorrichtung kann photochemisch in diese eingeschrieben sein. Ein derartiges Einbrennen des Faser-Bragg-Gitters kann zum Beispiel mit Hilfe von Interferenzmustern hochenergetischer Laserstrahlung erfolgen. Dem Fachmann sind entsprechende Techniken bekannt.

Üblicherweise wird das Faser-Bragg-Gitter bei nur einer bestimmten Laserwellenlänge reflektieren, und das von der erfindungsgemäßen Laservorrichtung ausgegebene Laserlicht weist dann nur diese eine Wellenlänge auf. Grundsätzlich kann das Faser-Bragg-Gitter aber auch so ausgebildet werden, dass es nicht nur bei einer sondern bei mehreren bestimmten Laserwellenlängen reflektiert. Das von der erfindungsgemäßen Laservorrichtung ausgegebene Laserlicht weist dann diese mehreren Laserwellenlängen auf, soweit sie von ihrem optisch aktiven Material unterstützt werden. Hierdurch kann der Gesamtwirkungsgrad der erfindungsgemäßen Laservorrichtung noch weiter gesteigert werden, indem ein noch größeres Volumen des gepumpten optisch aktiven Materials ausgenutzt wird, ohne dass Teile der Multimode-Faser durch übermäßige elektromagnetische Feldstärken überbelastet werden. Ein Beispiel für Faser-Bragg-Gitter, die bei mehreren bestimmten Laserwellenlängen reflektieren, sind sogenannte gechirpte Gitter, bei denen die Brechungsindexvariation eine modulierte Periodenlänge aufweist.

Eine typische erfindungsgemäße Laservorrichtung weist eine Doppelkern-Faser auf, deren innerer Kern als Multimode-Lichtleiter ausgeführt und mit optisch aktivem Material dotiert ist. Der den Laserkern umgebende Pumpmantel führt die Pumpstrahlung. An ein Ende des Multimode-Lichtleiters ist eine Doppelkern-Faser mit passivem Singlemode-Kern optisch angekoppelt. In den Singlemode-Kern ist ein Faser-Bragg-Gitter als Spiegel für Photonen einer bestimmten Laserwellenlänge eingeschriebenen. Das andere Ende des Multimode-Lichtleiters ist derart präpariert, dass die optische Endfläche des Multimode-Kerns möglichst wenig Strahlung in den Laserkern zurück reflektiert. Pumpstrahlung, die über die Endflächen oder die Mantelflächen eingekoppelt wird, wird mit Hilfe des Außenmantels geführt. Durch wellenlängen- und modenselektive Rückkopplung in dem Singlemode-Kern wird eine gezielte und selektive Selbsterregung des Multimode-Kerns erreicht, welche die Anregungsenergie des optisch aktiven Bereichs effizient und nur in einer Richtung und bei einer Wellenlänge energetisch zu einem Laserstrahl umsetzt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Grundaufbau der erfindungsgemäßen Laservorrichtung.
- **Fig. 2 bis 4**: zeigen mögliche Ausführungen einer Faserspleißstelle und eines Auskoppelfensters der Laservorrichtung gemäß Fig. 1; und
- **Fig. 5 und 6**: zeigen Möglichkeiten des optischen Pumpens von optisch aktivem Material der Laservorrichtung gemäß Fig. 1.

### FIGURENBESCHREIBUNG

Die Darstellungen der Figuren sind nicht maßstabsgerecht. Insbesondere sind die Durchmesser der Bestandteile der erfindungsgemäßen Laservorrichtung im Vergleich zu ihrer Länge zu groß wiedergegeben.

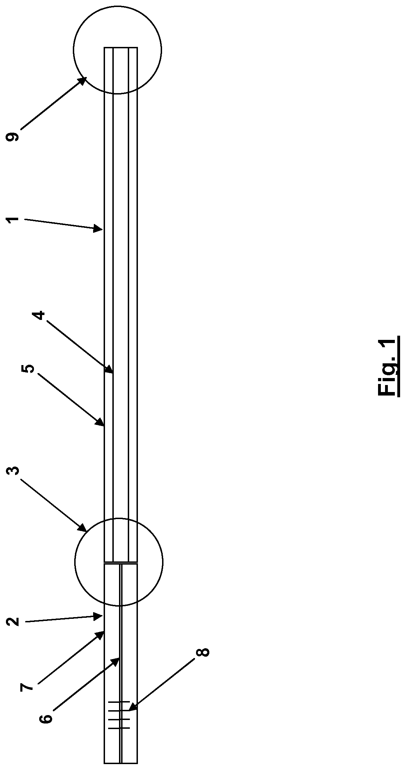

**Fig. 1** zeigt eine Multimode-Faser 1 und eine Singlemode-Faser 2, die an einer Faserspleißstelle 3 miteinander verbunden sind. Die Multimode-Faser 1 und die Singlemode-Faser 2 sind Doppelkern-Fasern. Die Multimode-Faser 1 weist einen Laserkern 4 mit optisch aktivem Material und einen Pumpmantel 5 auf. Die Singlemode-Faser 2 umfasst einen Kern 6 und einen Mantel 7. Der Kern 6 der Singlemode-Faser weist einen so kleinen Durchmesser auf, dass er im relevanten Emissionsspektrum des optisch aktiven Materials nur die transversale Grundmode des emittierten Lichts leitet. Der Laserkern 4 weist einen größeren Durchmesser auf und leitet daher auch höhere transversale Moden. In die Singlemode-Faser 2 ist ein Faser-Bragg-Gitter 8 eingeschrieben. An dem der Singlemode-Faser 2 gegenüberliegenden Ende der Multimode-Faser 1 ist ein Auskoppelfenster 9 für Laserlicht vorgesehen. Das Auskoppelfenster ist so ausgebildet, das eine Reflektion von Laserlicht zurück in die Multimode-Faser 1 bis auf einen definierten Rest unterdrückt ist.

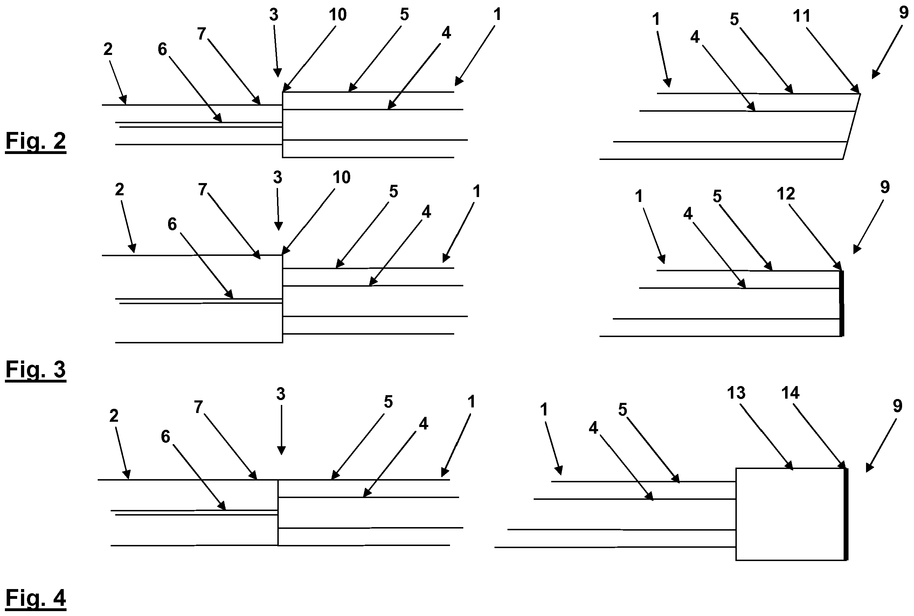

In den folgenden Figuren 2 bis 4 ist jeweils links eine Ausführungsform der Faserspleißstelle 3 und rechts eine Ausführungsform des Auskoppelfensters 9 in gegenüber Fig. 1 vergrößerter Darstellung gezeigt. Die verschiedenen Ausführungsformen der Faserspleißstelle 3 können beliebig mit den verschiedenen Ausführungsformen des Auskoppelfensters 9 kombiniert werden.

**Fig. 2** zeigt eine Faserspleißstelle 3, an der die Multimode-Faser 1 und die Singlemode-Faser 2 sowohl mit Kernen 4 und 6 unterschiedlicher Durchmesser als auch mit Mänteln 5 und 7 unterschiedlicher Durchmesser unter Ausbildung einer Stufe 10 aneinander gefügt sind. Der Vorteil einer solchen Anordnung besteht darin, dass die jeweils dünnere Faser kostengünstiger zu beschaffen ist.

Bei der Ausführungsform des Auskoppelfensters 9 gemäß Fig. 2 ist die optische Grenzfläche 11 am Ausgang der Multimode-Faser 1 schräg abpoliert.

**Fig. 3** zeigt ebenfalls eine Faserspleißstelle 3, an der die Multimode-Faser 1 und die Singlemode-Faser 2 sowohl mit Kernen 4 und 6 unterschiedlicher Durchmesser als auch mit Mänteln 5 und 7 unterschiedlicher Durchmesser unter Ausbildung einer Stufe 10 aneinander gefügt sind, wobei hier der Durchmesser des Mantels 7 der Singlemode-Faser 2 größer ist.

Das Auskoppelfensters 9 gemäß Fig. 3 weist eine mit Hilfe einer dielektrischen Beschichtung 12 teilentspiegelte Auskoppelfläche am Ende der Multimode-Faser 1 auf, die Reflektionen von Laserlicht in die Multimode-Faser 1 definierter begrenzt als eine schräg abpolierte Grenzfläche.

**Fig. 4** zeigt eine Faserspleißstelle 3, an der die Multimode-Faser 1 und die Singlemode-Faser 2 trotz Kernen 4 und 6 unterschiedlicher Durchmesser ohne Stufe aneinander gefügt sind, indem die Mäntel 5 und 7 gleiche Durchmesser aufweisen.

Das Auskoppelfensters 9 gemäß Fig. 4 weist eine Endkappe 13 auf, die selbst mit einer Schicht 14 teilentspiegelt ist.

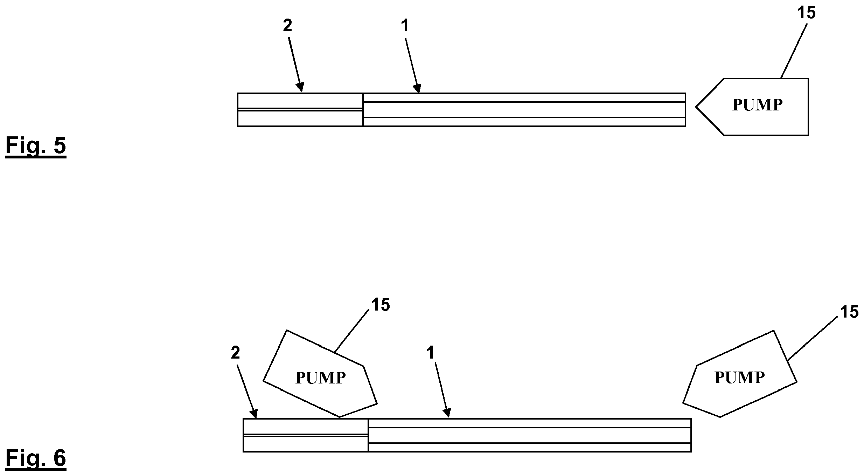

Die Figuren 5 bis 7 zeigen Möglichkeiten zur optischen Anregung des optisch aktiven Materials in dem Laserkern 4 der Multimode-Faser 1. Die mit der Siglemode-Faser 2 verbundene Multimode-Faser 1 kann entweder nur von ihrem einem Ende mit dem Auskoppelfenster 9 her mit Pumplicht von einer Pumplichtquelle 15 versorgt werden (**Fig. 5**) oder auch gleichzeitig von beiden Enden her. Darüber hinaus ist die Zuführung von Pumplicht über die beiden Enden der Mantelfläche des Pumpmantels 5 möglich (**Fig. 6**).

Zu der Laservorrichtung mit dem in Fig. 1 dargestellten Aufbau wurden die folgenden grundsätzlichen Überlegungen angestellt und experimentelle Untersuchungen durchgeführt. Das Ziel der experimentellen Untersuchungen bestand darin, eine Laservorrichtung mit sehr hoher Effizienz zu entwickeln. Dabei stand die Effizienz der Laservorrichtung gegenüber anderen oft bevorzugten Eigenschaften, wie z. B. der Strahlqualität, im Vordergrund. Da das angeregte Volumen von einem Multimode-Laser besser genutzt wird als von einem Singlemode-Laser, ist im Allgemeinen auch die Effizienz eines Lasers im Multimode-Betrieb höher als im Singlemode-Betrieb. Die Untersuchungen fanden daher an einem Multimode-Faserlaser statt.

Die Optimierung erfolgte am Beispiel eines Thulium-Faser-Laser, der zwischen 1,9 µm und 2,1 µm emittieren kann. Da die Thulium-Anregungsniveaus von einem Quasi-3-Niveau-Schema beschrieben werden, ist die beste Performance des Lasers nur bei guter Kühlung des aktiven Mediums zu erreichen. Dies wurde bei dem verwendeten Thulium-Faser-Laser dadurch erreicht, dass das geometrische Verhältnis von Oberfläche zu Volumen besonders vorteilhaft ist.

Der verwendete Thulium-Faser-Laser arbeitet dann am besten, wenn die Strahlung komplett in der Faser geführt wird. Ein externer Spiegel sollte daher durch ein internes Faser-Bragg-Gitter ersetzt werden. In bekannter Weise wurde das Faser-Bragg-Gitter nicht in die aktive Faser mit dem dotierter Laserkern geschrieben, sondern in eine passive Faser. Damit kann die aktive Faser besser gekühlt und in voller Länge genutzt werden. Dabei sollten die Wellenleitereigenschaften des passiven Kerns an die entsprechenden Eigenschaften des aktiven Laserkerns angepasst sein, damit an der Verbindungsstelle keine Reflektions- oder Streuverluste auftreten. In üblicher Weise besitzen dann die beiden Kerne vergleichbare Kerndurchmesser, welche dann wiederum die gleichen transversalen Moden, gemessen an ihrer transversalen Ausdehnung, aufnehmen können.

Sind die aktive und die passive Faser als Singlemode-Fasern für die transversale Grundmode ausgeführt, so lässt sich aus einer Kombination der beiden Fasern mit dem Faser-Bragg-Gitter in der passiven Faser relativ leicht ein stabiler Resonator aufbauen. Anders sieht es bei größeren Kerndurchmessern für den Multimodebetrieb aus.

Die Standard-HR-Gitter, welche in die Multimode-Faser eingeschrieben werden, erfüllen ihren beabsichtigten Zweck nicht. Ein Teil der Strahlung, die an dem Gitter vollständig reflektiert werden soll, geht daran vorbei. Meist sind das 20 % - 30 % der gesamten Leistung.

Die Ursache dafür ist in der spezifischen Wechselwirkung des Gitters mit den höheren Moden zu vermuten. In der Faser gibt es eine Kopplung zwischen den verschiedenen transversalen Moden, und zwar derart, dass die höheren Moden auf derselben Wellenlänge operieren können, wie sie durch das Gitter bei der Grundmode vorgegeben ist. Sobald sich aber eine höhere Mode mit der gleichen Wellenlänge wie die Grundmode in Richtung Gitter ausbreitet, sieht sie genau dieses Gitter nicht, da die entsprechende Feldverteilung im Wellenleiter das Gitter nur bei einer verschobenen Wellenlänge sieht, die typischer Weise einige Nanometer entfernt liegt.

Aus dieser Erkenntnis folgt, dass ein Faserlaser in einer Multimode-Faser mit üblichem Resonator, der von zwei maßgeblichen entgegenlaufende Wellen geprägt ist, nicht wirkungsvoll von einem schmalbandigen, in üblicher Weise hergestellten Faser-Bragg-Gitter, betrieben werden kann. Ein Teil der Strahlung geht an diesem Gitter vorbei.

Um dennoch von einer Multimode-Faser geeignet profitieren zu können, benutzt man nach dem Stand der Technik eine Oszillator / Verstärker Anordnung (MOPA). Diese Konfiguration gestaltet sich jedoch deutlich aufwändiger, da sie sowohl einen Resonator als auch einen Verstärker benötigt. Der Oszillator arbeitet in der Grundmode, hier sind die Bragg-Gitter entsprechend wirksam. Neben dem hochreflektierenden Gitter wird in der Regel auch ein teilreflektierendes Gitter auf der Auskoppelseite des Resonators verwendet. Dadurch ist die Arbeitsweise des Oszillators stabiler.

Der Oszillator arbeitet in der Grundmode und besitzt daher einen relativ kleinen Kerndurchmesser. Um eine höhere Leistungsverträglichkeit zu garantieren, wird der Verstärker mit größerem Kerndurchmesser ausgeführt. Die Modenanpassung zwischen Oszillator und Verstärker erfolgt in der Regel adiabatisch mit Hilfe eines Trichters oder einer stufenweisen Angleichung des kleineren Kerndurchmessers an den größeren Kerndurchmesser. Bei ausreichend Oszillatorleistung wird im Verstärker sogar vornehmlich nur die Grundmode angeregt und verstärkt. Es ist allerdings auch ein gewisser Multimode-Betrieb nicht ausgeschlossen.

Bei dieser Anordnung kann ein externer Rückreflex am Ausgang des Verstärkers gefährlich werden, wie jede rückwärts gerichtete Welle, die Leistung im Verstärker gewinnen kann. Durch die adiabatische Anpassung kann nämlich auch in Gegenrichtung relativ viel Leistung in den Oszillator zurückgekoppelt werden, wodurch die Leistungsverträglichkeit des Oszillators überschritten werden kann und das System zerstört wird. Um jegliche Art der Rückkopplung zum Oszillator zu verhindern, die zusätzlich die Leistungs- und Wellenlängenstabilität negativ beeinflussen würde, wird oftmals eine optische Diode zwischen Oszillator und Verstärker eingefügt. All dies zusammen ist letztlich ein relativ komplexer Aufbau.

Unabhängig von den soeben beschriebenen Effekten ist auch das Einschreiben eines Faser-Bragg-Gitters in eine Multimode-Faser nicht so einfach, wie in eine Grundmode-Faser, d. h. Singlemode-Faser. Der Grund liegt einfach in der entsprechend weitläufigeren Ausdehnung des Kerns bei Multimode-Fasern. Faser-Bragg-Gitter werden mit einem stehenden Interferenzbild eines leistungsstarken Lasers direkt in die Faser eingeschrieben. Im Bereich des Faserkerns wird dabei eine möglichst homogene Feldverteilung des Schreiblasers gefordert. Dies wird natürlich bei kleinen Kerndurchmessern wesentlich einfacher erreicht, als bei größeren Kerndurchmessern. Daher haben die Gitter in Grundmode-Fasern bei den Untersuchungen immer wesentlich bessere spektroskopische Eigenschaften gezeigt.

Bereits relativ moderat angeregte Fasern besitzen schon eine ganz erhebliche Verstärkung. Betreibt man einen Verstärker ganz ohne eine Rückkopplung (Spiegel), dann beginnt eine derartige Faser ab einer bestimmten Pumpleistung, initiiert durch die spontane Emission, in beide Richtungen Laserlicht zu emittieren. Der Prozess beginnt meist bei der Wellenlänge des Emissionsspektrums des optisch aktiven Materials, bei der die Verstärkung am größten ist. Der einfache Durchgang durch den Verstärker reicht aus einen Großteil der Inversion abzubauen.

Wenn man über ein gutes Multimode-Gitter in einem Multimode-Kern verfügen und dieses Gitter, welches in eine passive Faser eingeschrieben ist, an den aktiven Multimode-Verstärker anfügen (anspleißen) würde, entstünde zunächst ein Resonator. Der zweite Spiegel dieses Resonators würde durch die Fresnel-Reflexion am Brechungsindexsprung des Ausgangs des Verstärkers gebildet. Die Ausgangsstrahlung würde sich aus mehreren Moden zusammensetzen. Die Grundmode würde bei der Wellenlänge der Grundmode reflektiert, die höheren Moden bei den entsprechenden anderen Wellenlängen, die im Nanometerbereich neben der Grundmodewellenlänge liegen. So entstünde ein etwas breiteres Emissionsspektrum.

Experimente haben aber gezeigt, dass ein ideales Multimode-Gitter nicht so ohne weiteres herzustellen ist. Ein beträchtlicher Anteil der in Richtung Gitter laufenden Wellen ging an diesem vorbei. Trotzdem wurde das Ziel weiterverfolgt, eine einfache, im Wesentlichen aus zwei Komponenten bestehende Laservorrichtung zu schaffen, die auch für hohe Ausgangsleistungen geeignet ist.

Es ist bekannt, dass sich hoch verstärkende Lasermaterialien (z.B. Halbleiter-Laser), welche sich in einem Resonator befinden, durch zusätzliche externe Rückkopplung einer angekoppelten Grundmode-Faser mit eingeschriebenen Faser-Gitter, teilweise an das Modenprofil und an die durch das Gitter vorgegebene Wellenlänge anpassen. Ein derartiger Aufbau besitzt aber durch die Fresnel-Reflexion an den Fassetten des Halbleiterkristalls eine sehr hohe Reflektivität (> 30 %), wodurch schon ein dominant oszillierender Resonator vorgegeben ist.

Wie sich eine Multimode-Verstärker-Faser verhält, wenn eine einfache Grundmode-Faser mit eingeschriebenen Gitter analog der oben beschriebenen Anordnung einfach an einem Ende angeschlossen wird, ist theoretisch vorhersagbar. Wenn die Multimode-Faser ebenso, wie oben beschrieben, in einen Resonator mit signifikant reflektierenden Spiegeln eingeschlossen ist, sollte sie sich in ähnlicher Weise verhalten. Allerdings benötigte man für ein integriert aufgebautes System wiederum ein Multimode-Gitter als teilweise reflektierenden Resonatorspiegel. Damit wäre man erneut bei der alten Problematik des idealen Multimode-Gitters angelangt.

Stellt man die obige Frage jedoch in abgeänderter Form neu, nämlich: wie verhält sich der Verstärker, wenn keine Spiegel, sondern wenn nur ein Grundmode-Reflektor vorhanden ist, der an einer Seite angefügt (angespleißt) ist, ist die Antwort nicht mehr theoretisch vorhersagbar. Üblicherweise würde man diese Anordnung gar nicht in Erwägung ziehen, da zu vermuten ist, dass die einfach verstärkte Strahlung aufgrund der spontanen Emission wiederum in beiden Richtungen aus der Multimode-Faser austritt und dabei im Wesentlichen an dem Grundmode-Gitter vorbei läuft, da sich die Querschnittsflächen um einen Faktor 4 oder höher unterscheiden können. Es wird bestenfalls nur der Anteil zurückreflektiert, der flächenmäßig auf den Grundmode-Reflektor entfällt.

Es hat sich jedoch experimentell herausgestellt, dass die geringe Restreflektion des Grundmode-Gitters den Verstärker maßgeblich beeinflusst. Die vom angekoppelten Reflektor wellenlängenselektiv zurückgeworfene Strahlung reicht aus, um den Verstärker derart zu seeden, dass die Emission nur bei der vorgegebenen Wellenlänge erfolgt. Solange jedoch Reflektionen an den Endflächen des Verstärkers stattfinden, gibt es keine echte Vorzugsrichtung der emittierten Strahlung. Wenn aber die Reflektionen an den Endflächen minimiert werden, z. B. durch schräg gestellte Austrittsflächen oder angefügte Fenster, dann ist die Restreflektion des angekoppelten Grundmode-Gitters so dominant, dass sie über einen Verstärkungsprozess die gesamte Strahlung in Richtung gegenüberliegendem Auskoppelfenster treibt.

Ein Verstärker, der auf minimale Reflektion an den Endflächen ausgelegt ist, kann durch moden- und wellenlängen-selektive Rückkopplung in einem Durchgang effizient die Inversion im gesamten Faserkern abbauen und geeignete Laserstrahlung an der Auskoppelseite erzeugen. Dieser Prozess läuft besonders effizient ab, wenn der Verstärker gegen die Verstärkungsrichtung über den Außenmantel angeregt wird. Die über die Länge variierende Inversion folgt damit der Intensität der verstärkten Welle. Dieser Prozess funktioniert auch dann noch, wenn das Verhältnis von Grundmode-Kernquerschnitt zu Multimode-Kernquerschnitt größer als 10 ist.

Durchgeführte Experimente zeigen deutlich, dass der Verstärker nur Vorwärts-Strahlung bei einer Wellenlänge erzeugt. Die Wellenlänge ist durch das Gitter in der Grundmodefaser vorgegeben. Auch die höheren Moden der ausgegebenen Strahlung weisen diese Wellenlänge auf. Damit ist klar, dass diese in Vorwärtsrichtung generierte Strahlung nur durch Modenkopplung induziert werden kann. Dieser Prozess läuft offensichtlich wesentlich effizienter, als eine übliche Abschätzung ergeben würde. Würden die höheren Moden an dem Gitter reflektiert und nur dadurch in Vorwärtsrichtung gedrängt werden, dann besäßen sie eine von der Grundmode-Wellenlänge differierende Wellenlänge, die im Spektrometer leicht aufzulösen wäre, wo sie aber nicht zu beobachten ist.

### BEZUGSZEICHENLISTE

- 1: Multimode-Faser
- 2: Singlemode-Faser
- 3: Faserspleißstelle
- 4: Laserkern
- 5: Pumpmantel
- 6: Kern
- 7: Mantel
- 8: Faser-Bragg-Gitter
- 9: Auskoppelfenster
- 10: Stufe
- 11: Grenzfläche
- 12: Schicht
- 13: Endkappe
- 14: Schicht
- 15: Pumplichtquelle

## Patentansprüche

1. Laservorrichtung mit:
- einer Multimode-Faser (1) mit optisch aktiven Material in ihrem Laserkern (4),
- einer an ein Ende die Multimode-Faser (1) optisch angekoppelten Singlemode-Faser (2),
- einem in die Singlemode-Faser (2) eingeschriebenen Faser-Bragg-Gitter (8) als Spiegel für Photonen mindestens einer bestimmten Laserwellenlänge,
- einer vom anderen Ende der Multimode-Faser (1) Pumplicht in die Multimode-Faser (1) einkoppelnden Pumplichtquelle (15) und
- einem Auskoppelfenster (9) für Photonen der mindestens einen bestimmten Laserwellenlänge,
**dadurch gekennzeichnet,**
- **dass** ein Durchmesser des Laserkerns (4) der Multimode-Faser (1) mindestens 1,5-mal so groß ist wie ein Durchmesser eines Kerns (6) der Singlemode-Faser (2),
- wobei der Kern (6) der Singlemode-Faser (2) stumpf an den Laserkern (4) der Multimode-Faser (1) angesetzt ist,
- **dass** der Durchmesser des Laserkerns (4) der Multimode-Faser (1) so gewählt ist, dass bei Pumpen ihres optisch aktiven Materials mit dem Pumplicht ein Multimode-Laserstrahl aus dem Auskoppelfenster (9) austritt,
- **dass** das Auskoppelfenster (9) für Photonen der mindestens einen bestimmten Laserwellenlänge an dem anderen Ende der Multimode-Faser (1) angeordnet ist und für einen Laserresonator ausreichende Reflektionen von Photonen der mindestens einen bestimmten Laserwellenlänge zurück in die Multimode-Faser verhindert und
- **dass** das Auskoppelfenster (9) entweder durch das andere Ende der Multimode-Faser ausgebildet ist, oder ein zusätzliches optisches Element umfasst, das mit einem reflektionslosen Übergang mit der Multimode-Faser verbunden ist.

2. Laservorrichtung nach Anspruch 1, **dadurch gekennzeichnet, dass** das Auskoppelfenster (9) einen definierten Anteil der Photonen der mindestens einen bestimmten Laserwellenlänge zurück in die Multimode-Faser reflektiert.

3. Laservorrichtung nach Anspruch 1 oder 2, **dadurch gekennzeichnet, dass** die Reflektion des Auskoppelfensters (9) für Photonen der mindestens einen bestimmten Laserwellenlänge zurück in die Multimode-Faser (1) zwischen 0,5 und 20 %, vorzugsweise zwischen 1 und 10 % und am meisten bevorzugt 3 bis 7 % beträgt.

4. Laservorrichtung nach Anspruch 2 oder 3, **dadurch gekennzeichnet, dass** ein weiteres Auskoppelfenster für Photonen vorgesehen ist, die durch die begrenzte Reflektion in die Multimode-Faser an deren der Singlemode-Faser zugekehrten Ende seitlich neben dem Kern der Singlemode-Faser auftreten.

5. Laservorrichtung nach einem der vorhergehenden Ansprüche, **dadurch gekennzeichnet, dass** eine Austrittsfläche des Auskoppelfensters (9) teilentspiegelt ist.

6. Laservorrichtung nach einem der vorhergehenden Ansprüche, **dadurch gekennzeichnet, dass** die Singlemode-Faser (2) mit einem reflektionslosen Übergang mit der Multimode-Faser (1) verbunden ist.

7. Laservorrichtung nach einem der vorhergehenden Ansprüche, **dadurch gekennzeichnet, dass** ein Durchmesser des Laserkerns (4) der Multimode-Faser (1) mindestens 2-mal, vorzugsweise mindestens 3-mal so groß ist wie ein Durchmesser eines Kerns (6) der Singlemode-Faser (2).

8. Laservorrichtung nach einem der vorhergehenden Ansprüche, **dadurch gekennzeichnet, dass** die Multimode-Faser (1) und/oder die Single-Mode-Faser (2) eine Doppelkern-Faser ist.

9. Laservorrichtung nach einem der vorhergehenden Ansprüche, **dadurch gekennzeichnet, dass** der Laserkern der Multimode-Faser (1) mit einem seltenen Erdion dotiert ist.

10. Laservorrichtung nach einem der vorhergehenden Ansprüche, **dadurch gekennzeichnet, dass** auch der Kern der Singlemode-Faser (2) dotiert ist.

11. Laservorrichtung nach einem der vorhergehenden Ansprüche, **dadurch gekennzeichnet, dass** die Pumplichtquelle (15) mindestens eine Laserdiode aufweist.

12. Laservorrichtung nach einem der vorhergehenden Ansprüche, **dadurch gekennzeichnet, dass** die Pumplichtquelle (15) kontinuierlich Pumplicht in die Multimode-Faser (1) eingekoppelt.

13. Laservorrichtung nach einem der vorhergehenden Ansprüche, **dadurch gekennzeichnet, dass** die Länge der Multimode-Faser (1) so groß ist wie die Absorptionslänge des Pumplichts in der Multimode-Faser (1).

14. Laservorrichtung nach einem der vorhergehenden Ansprüche, **dadurch gekennzeichnet, dass** das Faser-Bragg-Gitter (8) photochemisch in die Singlemode-Faser (2) eingeschrieben ist.

15. Laservorrichtung nach einem der vorhergehenden Ansprüche, **dadurch gekennzeichnet, dass** das Faser-Bragg-Gitter (8) bei mehreren bestimmten Laserwellenlängen reflektiert.

## Claims

1. Laser device comprising:
- a multi-mode fibre (1) comprising optically active material in its laser core (4),
- a single-mode fibre (2) optically coupled to an end of the multi-mode fibre (1),
- a fibre-Bragg-grating (8) inscribed in the single-mode fibre (2) as a mirror for photons of at least one certain laser wave length,
- a pump light source (15) coupling pump light into the multi-mode fibre (1) from the other end of the multi-mode fibre (1), and
- an output window (9) for photons of the at least one certain laser wave length,
**characterised in**
- **that** a diameter of the laser core (4) of the multi-mode fibre (1) is at least 1.5 times as big as a diameter of a core (6) of the single-mode fibre (2),
- wherein the core (6) of the single-mode fibre (2) is bluntly jointed to the laser core (4) of the multi-mode fibre (1),
- **that** the diameter of the laser core (4) of the multi-mode fibre (1) is selected such that, when pumping its optically active material with the pump light, a multi-mode laser beam exits the output window (9),
- **that** the output window (9) for photons of the at least one certain laser wave length is arranged at the other end of the multi-mode fibre (1) and avoids a reflection of photons of the at least one certain laser wave length back into the multi-mode fibre (1) that is sufficient for a laser resonator, and
- **that** the output window (9) is either provided by the other end of the multi-mode fibre or includes an additional optical element which is connected to the multi-mode fibre via a reflection-free transition.

2. Laser device of claim 1, **characterised in that** the output window (9) reflects a defined portion of the photons of the at least one certain laser wave length back into the multi-mode fibre.

3. Laser device of claim 1 or 2, **characterised in that** the reflection of the output window (9) for photons of the at least one certain laser wave length back into the multi-mode fibre (1) is between 0.5 and 20 %, preferably between 1 and 10 %, and most preferably 3 to 7 %.

4. Laser device of claim 2 or 3, **characterised in that** a further output window is provided for photons which occur besides the core of the single-mode fibre at the end of the multi-mode fibre facing the single-mode fibre laterally due to the limited reflection into the multi-mode fibre.

5. Laser device of any of the preceding claims, **characterised in that** an output area of the output window (9) is partially non-reflecting.

6. Laser device of any of the preceding claims, **characterised in that** the single-mode fibre (2) is connected to the multi-mode fibre (1) via a reflection-free transition.

7. Laser device of any of the preceding claims, **characterised in that** a diameter of the laser core (4) of the multi-mode fibre (1) is at least two times, preferably at least three times as big as a diameter of a core (6) of the multi-mode fibre (2).

8. Laser device of any of the preceding claims, **characterised in that** the multi-mode fibre (1) and/or the single-mode fibre (2) is a double core fibre.

9. Laser device of any of the preceding claims, **characterised in that** the laser core of the multi-mode fibre (1) is doped with a rare earth ion.

10. Laser device of any of the preceding claims, **characterised in that** the core of the single-mode fibre (2) is also doped.

11. Laser device of any of the preceding claims, **characterised in that** the pump light source (15) comprises at least one laser diode.

12. Laser device of any of the preceding claims, **characterised in that** the pump light source (15) continuously couples pump light into the multi-mode fibre (1).

13. Laser device of any of the preceding claims, **characterised in that** the length of the multi-mode fibre (1) is as long as the absorption length of the pump light within the multi-mode fibre (1).

14. Laser device of any the preceding claims, **characterised in that** the fibre-Bragg-grating (8) is photo-chemically inscribed in the single-mode fibre (2).

15. Laser device of any of the preceding claims, **characterised in that** the fibre-Bragg-grating (8) reflects at a plurality of certain laser wave length.

## Revendications

1. Dispositif laser, avec :
- une fibre multimode (1) avec un matériau optiquement actif dans son coeur à effet laser (4),
- une fibre monomode (2) couplée optiquement à une extrémité de la fibre multimode (1),
- un réseau de Bragg sur fibre (8) inscrit dans la fibre monomode (2) en tant que miroir pour des photons d'au moins une longueur d'onde laser déterminée,
- une source de lumière de pompage (15) couplant de la lumière de pompage dans la fibre multimode (1) à partir de l'autre extrémité de la fibre multimode (1), et
- une fenêtre de découplage (9) pour des photons de la longueur d'onde laser déterminée au moins au nombre de un,
**caractérisé en ce que**
- un diamètre du coeur à effet laser (4) de la fibre multimode (1) est au moins 1,5 fois plus grand qu'un diamètre d'un coeur (6) de la fibre monomode (2)
- le coeur (6) de la fibre monomode (2) étant placé en aboutement avec le coeur à effet laser (4) de la fibre multimode (1),
- le diamètre du coeur à effet laser (4) de la fibre multimode (1) est choisi de telle sorte que, lors du pompage du matériau optiquement actif de celle-ci avec la lumière de pompage, un faisceau laser multimode sort de la fenêtre de découplage (9),
- la fenêtre de découplage (9) pour des photons de la longueur d'onde laser déterminée au moins au nombre de un est disposée à l'autre extrémité de la fibre multimode (1) et empêche des réflexions en retour vers la fibre multimode de photons de la longueur d'onde laser déterminée au moins au nombre de un qui sont suffisantes pour un résonateur laser, et
- la fenêtre de découplage (9) soit est constituée par l'autre extrémité de la fibre multimode, soit comprend un élément optique supplémentaire qui est relié à la fibre multimode avec une transition sans réflexion.

2. Dispositif laser selon la revendication 1, **caractérisé en ce que** la fenêtre de découplage (9) réfléchit dans la fibre multimode une fraction définie des photons de la longueur d'onde laser déterminée au moins au nombre de un.

3. Dispositif laser selon la revendication 1 ou 2, **caractérisé en ce que** la réflexion, en retour vers la fibre multimode (1), de la fenêtre de découplage (9) pour des photons de la longueur d'onde laser déterminée au moins au nombre de un est comprise entre 0,5 et 20 %, de préférence entre 1 et 10 % et, de façon la plus préférée, entre 3 et 7 %.

4. Dispositif laser selon la revendication 2 ou 3, **caractérisé en ce qu'**il est prévu une autre fenêtre de découplage pour des photons qui apparaissent du fait de la réflexion limitée vers la fibre multimode à son extrémité tournée vers la fibre monomode latéralement près du coeur de la fibre monomode.

5. Dispositif laser selon l'une des revendications précédentes, **caractérisé en ce qu'**une surface de sortie de la fenêtre de découplage (9) est partiellement soumise à un traitement antireflet.

6. Dispositif laser selon l'une des revendications précédentes, **caractérisé en ce que** la fibre monomode (2) est raccordée à la fibre multimode (1) avec une transition sans réflexion.

7. Dispositif laser selon l'une des revendications précédentes, **caractérisé en ce qu'**un diamètre du coeur à effet laser (4) de la fibre multimode (1) est au moins 2 fois plus grand, de préférence au moins 3 fois plus grand, qu'un diamètre d'un coeur (6) de la fibre monomode (2).

8. Dispositif laser selon l'une des revendications précédentes, **caractérisé en ce que** la fibre multimode (1) et/ou la fibre monomode (2) est une fibre à double coeur.

9. Dispositif laser selon l'une des revendications précédentes, **caractérisé en ce que** le coeur à effet laser de la fibre multimode (1) est doté d'un ion de terre rare.

10. Dispositif laser selon l'une des revendications précédentes, **caractérisé en ce que** le coeur de la fibre monomode (2) est également doté.

11. Dispositif laser selon l'une des revendications précédentes, **caractérisé en ce que** la source de lumière de pompage (15) présente au moins une diode laser.

12. Dispositif laser selon l'une des revendications précédentes, **caractérisé en ce que** la source de lumière de pompage (15) couple de façon continue de la lumière de pompage dans la fibre multimode (1).

13. Dispositif laser selon l'une des revendications précédentes, **caractérisé en ce que** la longueur de la fibre multimode (1) est égale à la longueur d'absorption de la lumière de pompage dans la fibre multimode (1).

14. Dispositif laser selon l'une des revendications précédentes, **caractérisé en ce que** le réseau de Bragg sur fibre (8) est inscrit par voie photochimique dans la fibre monomode (2).

15. Dispositif laser selon l'une des revendications précédentes, **caractérisé en ce que** le réseau de Bragg sur fibre (8) réfléchit pour plusieurs longueurs d'onde laser déterminées.
